# FASCICULE DE BREVET EUROPEEN

(11) **EP 0 502 067 B1**
(45) Date de publication et mention de la délivrance du brevet: **21.09.1994**
(21) Numéro de dépôt: 90917674.5
(22) Date de dépôt: 22.11.1990
(51) Int. Cl.: H02J 7/02

(54) **DISPOSITIF DE CHARGE DE MOYENS D'ACCUMULATION D'ENERGIE ELECTRIQUE, MUNI DE MOYENS PERMETTANT DE MAITRISER CETTE CHARGE**
LADEVORRICHTUNG ZUR ELEKTRISCHEN ENERGIESPEICHERUNG MIT LADESTEUERUNGSMITTELN
DEVICE FOR CHARGING ELECTRICAL ENERGY STORAGE MEANS PROVIDED WITH MEANS FOR CONTROLLING SAID CHARGING

(30) Priorité: 23.11.1989 FR 8915423
(43) Date de publication de la demande: 09.09.1992
(73) Titulaire: COMMISSARIAT A L'ENERGIE ATOMIQUE Etablissement de Caractère Scientifique Technique et Industriel, 75015 Paris (FR)
(72) Inventeur: GIDON, Serge Résidence le Ventoux, F-26790 Suze-la-Rousse (FR); HENNEVIN, Bernard, F-69150 Décines (FR)
(74) Mandataire: Poulin, Gérard
(86) Numéro de dépôt international: FR9000839
(87) Numéro de publication internationale: WO9108605

(56) Documents cités:
- EP-A- 0 226 253
- FR-A- 1 439 680
- FR-A- 2 575 010
- US-A- 3 211 915
- US-A- 4 405 889
- US-A- 4 549 091
- J. Phys. E: Sci. Instrum., vol. 21, 1988, U.K. pages 388-392; J.K. MITTAL et al : "Design and performance of a 20 watt copper vapour laser"
- J. Phys. E: Sci. Instrum., vol. 21, 1988, U.K., pages 218-224; H.J. BAKER et al: "An efficient laser pulser using ferrite magnetic switches"

## Description

La présente invention concerne un dispositif de charge de moyens d'accumulation d'énergie électrique.

Elle s'applique notamment à la réalisation d'un générateur de puissance, destiné à l'alimentation électrique impulsionnelle d'un laser à vapeur métallique, un laser à vapeur de cuivre par exemple.

On sait que dans un laser à vapeur métallique et en particulier dans un laser à vapeur de cuivre, on obtient une inversion de population en excitant la vapeur par des décharges électriques de grande puissance instantanée.

L'énergie de ces décharges provient d'un générateur d'impulsions de puissance qui comporte des moyens d'accumulation d'énergie électrique (comportant eux-mêmes un condensateur ou un ensemble de condensateurs) préalablement chargés sous une tension électrique élevée.

Ces moyens d'accumulation d'énergie électrique sont associés à des moyens de commutation par l'intermédiaire desquels ils se déchargent dans le laser.

Ces moyens de commutation peuvent être associés à un ou des étages de compression magnétique qui permettent de diminuer la largeur temporelle des impulsions parvenant au laser.

Un générateur d'impulsions de puissance est décrit dans l'article (1) de J.K. MITTAL et al. intitulé "Design and performance of a 20 watt copper vapour laser" et publié dans J. Phys. E: Sci. Instrum. 21 (1988) pp. 388-392, auquel on se reportera.

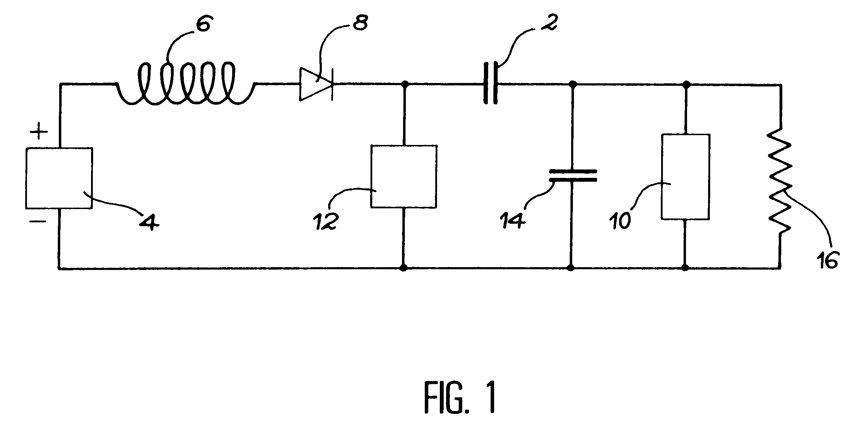

Le générateur décrit dans cet article comporte (voir figure 1) un condensateur 2 relié à la borne positive d'une source de tension électrique continue 4 par l'intermédiaire d'une inductance 6 et d'une diode 8. L'inductance 6 est reliée, d'un côté, à la borne positive de la source 4 et, de l'autre, à l'anode de la diode 8 dont la cathode est reliée à une borne du condensateur 2.

Le laser 10 à alimenter est monté entre l'autre borne du condensateur 2 et la borne négative de la source 4. Des moyens de commutation, comportant un thyratron 12, sont montés entre la borne négative de la source 4 et la connexion entre le condensateur 2 et la diode 8. Un condensateur 14, appelé condensateur de "picking" et une résistance 16 de dérivation sont montées entre les électrodes du laser 10.

D'autres générateurs connus comportent des dispositifs semiconducteurs de commutation (thyristors de type GT0 ou transistors de type IGBT par exemple).

Pour favoriser le commutation, il est également connu d'associer à ces dispositifs semiconducteurs de commutation des éléments magnétiques saturables (inductances saturables).

A ce sujet, on pourra se reporter à l'article (2) de H.J. BAKER et al. intitulé "An efficient laser pulser using ferrite magneticswitches" et publié dans J. Phys. E. Sci. Instrum. 21 (1988) pp. 218-224.

Les générateurs d'impulsions de puissance, qui sont connus dans l'état de la technique, sont sujets à des instabilités qui se traduisent par des fluctuations de l'énergie de ces impulsions, et donc des fluctuations de l'énergie des impulsions lumineuses engendrées par les lasers.

Ces fluctuations d'énergie sont en fait dues à la variation de la tension de recharge des moyens d'accumulation d'énergie électrique. Cette variation de tension est elle-même due aux fluctuations de l'énergie électrique absorbée par le laser associé à ces moyens d'accumulation.

Cette énergie absorbée dépend beaucoup des conditions de décharge dans la vapeur du laser.

L'énergie électrique réfléchie au niveau de la "tête" du laser (vapeur, enceinte contenant cette dernière et électrodes de décharge dans la vapeur) se présente sous la forme d'une tension électrique variable aux bornes des moyens d'accumulation d'énergie électrique, tension qui, lors du cycle de charge suivant, conduit aux fluctuations mentionnées plus haut.

Ainsi, dans le générateur décrit dans l'article (1), la tension v de recharge du condensateur 2 après une décharge est égale à 2(v1-v0), v1 représentant la tension d'alimentation du condensateur 2 et v0 représentant la tension "initiale" (c'est-à-dire la tension après ladite décharge) aux bornes du condensateur 2, v0 étant due à l'énergie électrique réfléchie par le laser. C'est la tension v0 et, par conséquent, la tension v qui fluctuent.

Dans le cas des générateurs comportant des dispositifs semi-conducteurs de commutation associés à des éléments magnétiques saturables, ces générateurs sont de plus sujets à des instabilités qui se traduisent par une gigue, c'est-à-dire une instabilité de position temporelle des impulsions électriques fournies au laser. Cette gigue est inadmissible lors de la mise en série de plusieurs lasers fonctionnant en tant qu'amplificateurs.

La présente invention a pour but de remédier aux inconvénients d'instabilité que présentent les générateurs connus d'alimentation des lasers à vapeur métallique et notamment des lasers à vapeur de cuivre, en résolvant le problème de la maîtrise de l'énergie électrique stockée dans les moyens d'accumulation que comportent ces générateurs.

Plus généralement, la présente invention vise à maîtriser la charge de moyens d'accumulation d'énergie électrique (par exemple un condensateur ou un ensemble de condensateurs montés en série ou en parallèle) en tenant compte d'une charge résiduelle que ces moyens d'accumulation sont susceptibles de présenter, après décharge.

On connaît par le document US-A-4 405 889 un dispositif conforme au préambule de la revendication 1. Ce document US-A-4 405 889 décrit une alimentation de puissance destinée à un appareil de décharge répétitive. Cette alimentation comprend une source de tension continue, un premier condensateur de stockage primaire et un deuxième condensateur de décharge faisant partie de l'appareil. Lorsque le deuxième condensateur est déchargé, un premier circuit de déclenchement est activé et commande la fermeture d'un interrupteur, le premier condensateur se décharge et le deuxième condensateur se charge. Lorsque la tension entre les bornes de ce deuxième condensateur atteint une valeur prédéterminée, un deuxième circuit de déclenchement commande la fermeture d'un autre interrupteur permettant d'envoyer le courant de décharge du premier condensateur à un condensateur intermédiaire qui, dans un premier temps, se charge et devra être déchargé dans un deuxième temps.

On connaît par FR-A-2 575 010 un bloc d'alimentation pour laser pulsé à décharge électrique. Ce bloc d'alimentation comprend une source de tension continue, un condensateur tampon monté en parallèle avec la source, un ensemble de charges oscillantes commandées qui est monté entre la source et un condensateur-réservoir, un diviseur de tension monté en parallèle avec le condensateur-réservoir, un transformateur d'impulsions dont l'enroulement primaire est relié à l'ensemble de charges oscillantes et à l'enroulement secondaire auquel est reliée une charge, une porte de déclenchement reliée à l'enroulement primaire du transformateur, une source de tension de référence, un élément à seuil bascule dont l'entrée de comparaison est reliée au point milieu du diviseur de tension et une autre entrée à la source de référence, un formateur d'impulsions dont l'entrée est reliée à la sortie de l'élément à seuil bascule et la sortie, à l'entrée de commande de l'ensemble de charges oscillantes. Le bloc d'alimentation comprend aussi un ensemble de compensation des courants de fuite dont l'entrée de commande est reliée à la sortie de l'élément à seuil bascule et qui est montée en parallèle avec le condensateur-réservoir.

On connaît par EP-A-0 226 253 un circuit d'alimentation électrique pour charger un accumulateur.

La présente invention a pour objet un dispositif de charge de moyens d'accumulation d'énergie électrique conformément à la revendication 1.

Par "diode", on entend un moyen qui ne laisse passer un courant électrique que dans un seul sens.

La présente invention a également pour objet un dispositif de charge conformément à la revendication 2.

L'invention a aussi pour objet un dispositif de charge conforme à la revendication 3.

Dans une réalisation particulière de l'invention, facilitant la mise en oeuvre de celle-ci, les moyens capables d'absorber l'énergie électrique excédentaire sont les moyens d'alimentation électrique continue, ces derniers comportant des moyens de stockage d'énergie électrique, prévus pour récupérer l'énergie électrique excédentaire.

Dans ce cas, les moyens prévus pour dérouter cette énergie électrique excédentaire peuvent coopérer avec ces moyens d'alimentation électrique continue de façon que l'énergie électrique excédentaire soit absorbée, dès son apparition, par ces derniers.

Les moyens de commutation peuvent être des moyens de commutation à semiconducteurs.

Enfin, les moyens d'accumulation d'énergie électrique peuvent être destinés à l'alimentation électrique d'un laser à vapeur métallique.

La présente invention sera mieux comprise à la lecture de la description suivante, d'exemples de réalisation donnés à titre purement indicatif et nullement limitatif, en référence aux dessins annexés sur lesquels :
- la figure 1, déjà décrite, illustre schématiquement un générateur connu d'impulsions électriques,
- la figure 2 est une vue schématique d'un mode de réalisation particulier du dispositif objet de l'invention,
- la figure 3 est une vue schématique d'un autre mode de réalisation particulier permettant l'isolation galvanique d'une charge, qui est destinée à être alimentée par les moyens d'accumulation que comporte le dispositif de la figure 3, vis-à-vis de la source de tension continue qui alimente ce dispositif,
- la figure 4 illustre schématiquement une variante de réalisation du dispositif de la figure 3,
- la figure 5 est une vue schématique d'un autre mode de réalisation particulier permettant également une telle isolation galvanique, et
- la figure 6 illustre schématiquement une variante de réalisation du dispositif de la figure 5.

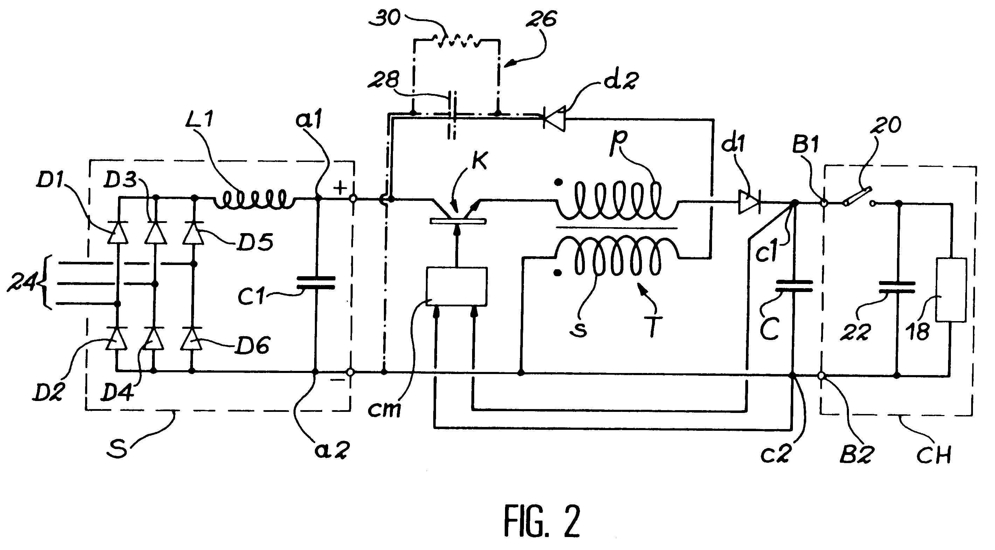

Sur la figure 2, on a représenté schématiquement un dispositif conforme à l'invention, qui est destiné à charger de façon impulsionnelle des moyens d'accumulation d'énergie électrique C, par exemple constitués par un condensateur. Ce condensateur est chargé grâce à une source de tension électrique continue S.

Le condensateur C est destiné à fournir l'énergie électrique qu'il a emmagasinée à une charge CH. Les bornes c1 et c2 du condensateur C sont respectivement reliées aux bornes B1 et B2 de cette charge CH.

A titre purement indicatif et nullement limitatif, le condensateur C est destiné à l'alimentation électrique impulsionnelle d'un laser à vapeur métallique 18 par l'intermédiaire d'un commutateur 20 qui est par exemple un thyratron. Le commutateur 20 est relié, d'un côté, à la borne B1 et, de l'autre, à l'une des bornes du laser 18 dont l'autre borne est reliée à la borne B2. Un condensateur de "picking" 22 est également monté entre les bornes du laser 18. Le condensateur C, une fois chargé, est déchargé de façon impulsionnelle dans le laser 18 par l'intermédiaire du commutateur 20.

La source S, qui est destinée à charger le condensateur C, comprend, à titre purement indicatif et nullement limitatif, six diodes D1 à D6, une inductance L1 et un condensateur C1 ; les cathodes des diodes D2, D4 et D6 sont respectivement reliées aux anodes des diodes D1, D3 et D5 dont les cathodes sont reliées à une borne de l'inductance L1 ; l'autre borne de L1 est reliée à une borne a1 du condensateur C1 dont l'autre borne a2 est reliée aux anodes des diodes D2, D4 et D6 ; la source S est alimentée par le réseau triphasé 24 et les trois conducteurs de ce réseau triphasé 24 sont respectivement reliés aux anodes des diodes D1, D3 et D5 ; on dispose ainsi d'une source de tension continue S dont la borne + correspond à la borne a1 du condensateur C1 et dont la borne - correspond à la borne a2 de ce condensateur C1.

Le dispositif conforme à l'invention, qui est schématiquement représenté sur la figure 2, comprend un commutateur K, qui est muni d'une carte de commande en tout ou rien cm, un transformateur T dont le bobinage primaire est noté p et le bobinage secondaire s, une diode d1 et une diode d2.

A titre purement indicatif et nullement limitatif, le commutateur K est un transistor IGBT de type NPN. La carte cm est du genre de celles qui sont utilisées dans les alimentations électriques à découpage pour commander les transistors de puissance de telles alimentations.

La carte cm comporte deux entrées qui constituent ensemble une entrée différentielle et qui sont respectivement reliées aux bornes c1 et c2 de C. La carte cm comporte aussi une sortie qui commande la base du transistor K.

Le collecteur du transistor K est relié à la borne + de la source S. L'émetteur de-ce transistor K est relié à une borne du bobinage primaire p du transformateur T et l'autre borne de ce bobinage p est reliée à l'anode de la diode d1 dont la cathode est reliée à la borne c1 du condensateur C.

La borne - de la source S est reliée à la borne c2 du condensateur C ainsi qu'à une borne du bobinage secondaire s du transformateur T, l'autre borne de ce bobinage secondaire s étant reliée à l'anode de la diode d2 dont la cathode est reliée à la borne + de la source S.

On notera que le dispositif schématiquement représenté sur la figure 2 comprend des éléments magnétiques parmi lesquels figure notamment le bobinage primaire p du transformateur T, ce bobinage primaire p correspondant à l'inductance 6 de la figure 1 et jouant le rôle de cette inductance. Dans le dispositif représenté sur cette figure 1, le transfert de l'énergie électrique de la source 4 vers le condensateur 2 se fait par l'intermédiaire de l'énergie magnétique emmagasinée dans l'inductance 6.

En général, cette énergie magnétique est entièrement utilisée pour surcharger le condensateur 2 au-dessus de la tension fournie par la source 4. Ce transfert énergétique n'est malheureusement pas maitrisé et dépend de l'état de charge initial du condensateur 2 (c'est-à-dire l'état de charge suivant la précédente décharge).

Le dispositif schématiquement représenté sur la figure 2 permet, au contraire, d'obtenir une tension stable aux bornes du condensateur C en déroutant l'énergie excédentaire des éléments magnétiques que comporte ce dispositif et parmi lesquels figure notamment le bobinage primaire p, vers la source de tension continue S ou, dans une variante de réalisation qui sera décrite par la suite, vers des moyens capables d'absorber cette énergie excédentaire.

La carte de commande cm mesure la tension aux bornes du condensateur C, compare celle-ci à un seuil déterminé et commande l'ouverture du commutateur K lorsque ce seuil est atteint.

Plus précisément, à la fin du cycle de charge-décharge précédent, il existe aux bornes du condensateurs C une tension résiduelle et la carte cm détecte que la tension aux bornes du condensateur C est inférieure au seuil déterminé (ce dernier étant supérieur aux tensions résiduelles susceptibles d'exister) ; la carte cm commande alors la fermeture du commutateur K ; par conséquent, le condensateur C se charge et dès que la tension aux bornes de ce condensateur atteint la tension souhaitée (seuil déterminé), ceci est détecté par la carte cm qui commande alors l'ouverture du commutateur K (l'énergie excédentaire disponible dans le condensateur C1 - qui a servi à charger le condensateur C - demeurant alors dans ce condensateur C1).

Cependant, il existe, lors de l'ouverture du commutateur K, de l'énergie dans le transformateur T et cette énergie ne doit pas aller vers le condensateur C. Cette énergie excédentaire ne peut être évacuée à travers le bobinage primaire p du transformateur T puisque le commutateur K est ouvert. Elle est donc évacuée à travers le bobinage secondaire s du transformateur T et la diode passante d2 et retourne ainsi à la source S où elle est récupérée par stockage dans le condensateur C1.

L'évacuation de cette énergie excédentaire (de type magnétique) n'est possible que si le couplage des bobinages primaire p et secondaire s dans le transformateur T est dans le bon sens. Ce sens est indiqué de façon classique, par des points sur la figure 2 à laquelle on se reportera.

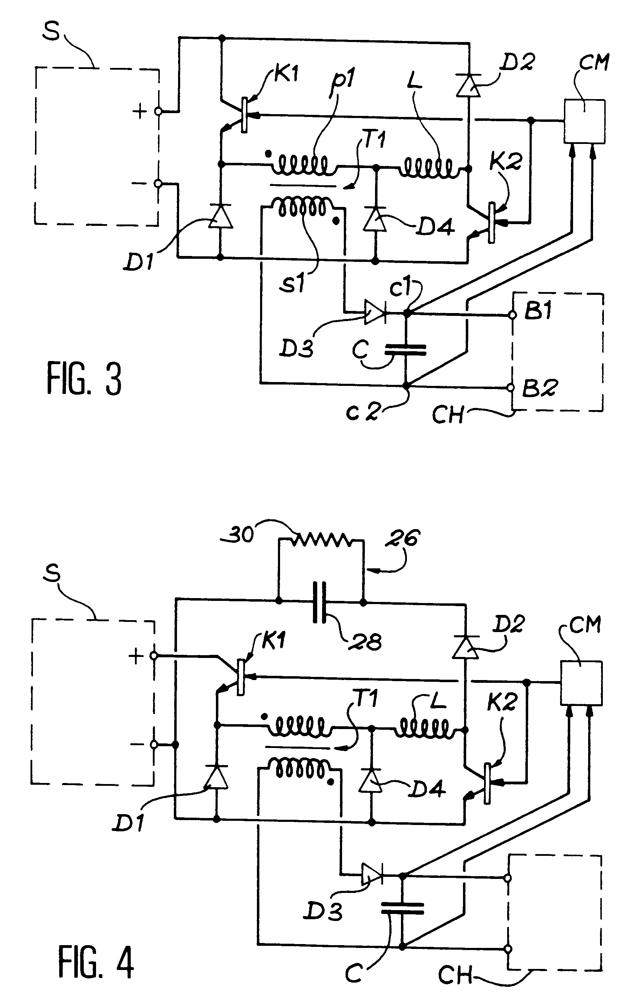

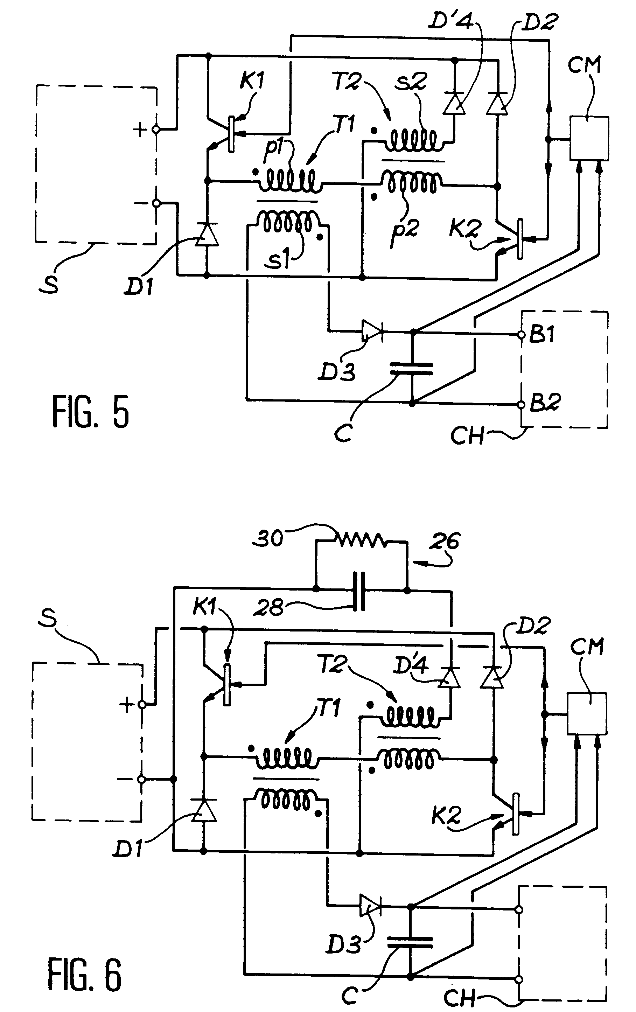

On notera que cette énergie excédentaire est absorbée par la source S dès qu'elle apparaît dans le dispositif. Il en est c'ailleurs de même pour les dispositifs des figures 3 et 5 où les énergies excédentaires qui apparaissent dans ces dispositifs sont absorbés, dès leur apparition, par la source S.

On précise que la diode d1 du dispositif de la figure 2 sert à empêcher que le condensateur C se décharge vers la source S.

Dans une variante de réalisation, qui est schématiquement représentée en traits mixtes sur la figure 2, l'énergie excédentaire n'est pas évacuée vers la source S. Elle est évacuée vers des moyens 26 capables d'absorber cette énergie et comportant à cet effet un condensateur 28 et une résistance électrique 30.

Le dispositif est alors modifié de la façon suivante : la cathode de la diode d2 n'est plus reliée à la borne + de la source S ; cette cathode de la diode d2 est reliée à une borne du condensateur 28 dont l'autre borne est reliée à la borne - de la source S ; la résistance 30 est montée entre les bornes du condensateur 28 de sorte que l'énergie excédentaire, qui est absorbée par les moyens 26, est dissipée par cette résistance électrique 30, entre deux décharges successives du condensateur C.

Bien entendu, on obtiendrait encore un dispositif conforme à l'invention en inversant les polarités des diodes d1 et d2 et celle de la source S (la borne + étant alors connectée à la borne c2 et la borne - étant connectée au collecteur du transistor K).

On notera que le dispositif représenté sur la figure 2 et sa variante, qui est représentée en traits mixtes sur cette figure 2, ne permettent pas l'isolation galvanique de la charge CH vis-à-vis de la source S.

En tant que commutateur K, on pourrait par exemple utiliser, au lieu d'un transistor IGBT, un thyristor GTO dont l'anode, la cathode et la gâchette seraient respectivement connectées comme le collecteur, l'émetteur et la base du transistor.

Le dispositif conforme à l'invention, qui est schématiquement représenté sur la figure 3, permet d'obtenir une telle isolation galvanique. Ce dispositif de la figure 3 utilise un pont en H dissymétrique.

Le dispositif schématiquement représenté sur la figure 3 est encore destiné à charger un condensateur C dont les bornes c1 et c2 sont destinées à être respectivement reliées aux bornes B1 et B2 de la charge CH.

Le dispositif de la figure 3 comprend deux commutateurs K1 et K2 ainsi qu'une carte CM destinée à commander simultanément en tout ou rien ces commutateurs K1 et K2.

A titre purement indicatif et nullement limitatif, ces deux commutateurs K1 et K2 sont des transistors IGBT de type NPN. La carte de commande CM est du genre de celles qui sont utilisées dans les alimentations électriques à découpage pour commander les transistors de puissance de telles alimentations.

La carte CM comporte deux entrées et qui constituent ensemble une entrée différentielle et qui sont respectivement reliées aux bornes c1 et c2 du condensateur C. La carte CM comporte également une sortie qui commande à la fois la base du transistor K1 et la base du transistor K2.

Le dispositif représenté sur la figure 3 comprend également quatre diodes D1, D2, D3 et D4, un transformateur T1, dont le bobinage primaire est noté p1 et dont le bobinage secondaire est noté s1, et une inductance L.

Une borne du bobinage secondaire s1 est reliée à l'anode de la diode D3 dont la cathode est reliée à la borne c1 du condensateur C. L'autre borne du bobinage secondaire s1 est reliée à la borne c2 de ce condensateur C.

La borne + de la source S est reliée au collecteur du transistor K1 ainsi qu'à la cathode de la diode D2. La borne - de la source S est reliée à l'anode de la diode D1, à l'anode de la diode D4 et à l'émetteur du transistor K2. La cathode de la diode D1 est reliée à l'émetteur du transistor K1 ainsi qu'à une borne du bobinage primaire p1 du transistor T1. L'autre borne de ce bobinage primaire est reliée à la cathode de la diode D4 ainsi qu'à une borne de l'inductance L dont l'autre borne est reliée à l'anode de la diode D2 ainsi qu'au collecteur du transistor K2.

On explique ci-après le fonctionnement du dispositif représenté sur la figure 3.

Lorsque le condensateur C a fourni, au cours d'une décharge précédente, l'énergie qu'il contenait à la charge CH et ne présente plus à ses bornes qu'une tension résiduelle, ceci est détecté par la carte CM qui commande alors la fermeture simultanée des commutateurs K1 et K2. Ceci permet à la source S de recharger le condensateur C par l'intermédiaire du transformateur T1.

La diode D3 a pour fonction d'empêcher le condensateur C de se décharger en direction de la source S.

On notera que l'inductance L correspond à l'inductance 6 de la figure 1.

Le transformateur T1 a pour fonction d'assurer la séparation galvanique de la charge CH vis-à-vis de la source S et permet également l'adaptation de la tension de la source S à la tension de la charge CH, en choisissant convenablement le rapport de ce transformateur T1.

On notera que, dans le dispositif de la figure 3, le bobinage primaire p1 du transformateur T1 ne fait apparaître que son inductance de fuite.

L'atteinte, par la tension aux bornes du condensateur C, de la valeur souhaitée (seuil déterminé), est détectée par la carte CM qui commande alors simultanément l'ouverture du commutateur K1 et l'ouverture du commutateur K2.

Alors, il se produit une circulation de courant électrique, dû à l'énergie excédentaire dans l'inductance L, de la borne - à la borne + de la source S en passant par D4, L et D2 ; de même il se produit une circulation de courant électrique, dû à l'énergie excédentaire dans l'inductance de fuite du transformateur T1, de la borne - à la borne + de la source S en passant par D1, p1, L et D4 ; de ce fait, ces énergies excédentaires sont envoyées à la source S où elle sont absorbées grâce au condensateur C1.

Sur la figure 4, on a représenté schématiquement une variante de réalisation du dispositif de la figure 3.

Dans le dispositif de la figure 4, l'énergie excédentaire n'est plus envoyée à la source S mais aux moyens 26 déjà mentionnés plus haut. A cet effet, dans le dispositif de la figure 4, la cathode de la diode D2 n'est plus reliée à la borne + de la source S mais est reliée à une borne du condensateur 28 des moyens 26, l'autre borne de ce condensateur 28 étant reliée à la borne - de la source S. La résistance électrique 30 est encore montée entre les bornes du condensateur 28.

Bien entendu, on obtiendrait encore des dispositifs conformes à l'invention en inversant, dans les dispositifs des figures 3 et 4, les polarités des diodes D1, D2, D3 et D4 et la polarité de la source S (la borne + se trouvant alors reliée à l'émetteur du transistor K2 et la borne - au collecteur du transistor K1).

On notera que, pour que les dispositifs des figures 3 et 4 fonctionnent, le couplage des bobinages primaire p1 et secondaire s1 du transformateur T1 doit être dans le bon sens. Ce sens est indiqué, de façon classique, par des points sur les figures 3 et 4.

Sur la figure 5, on a représenté schématiquement un autre dispositif conforme à l'invention qui diffère de celui qui est représenté sur la figure 3 par le fait que la diode D4 et l'inductance L sont supprimées dans ce dispositif de la figure 5 et que ce dernier comprend deux nouveaux éléments, à savoir un transformateur supplémentaire T2, dont le bobinage primaire est noté p2 et dont le bobinage secondaire est noté s2, ainsi qu'une diode supplémentaire D′4.

Une borne du bobinage secondaire s2 du transformateur T2 est reliée à la borne - de la source S et l'autre borne de ce bobinage s2 est reliée à l'anode de la diode D′4 dont la cathode est reliée à la borne + de la source S.

Comme précédemment, une borne du bobinage primaire p1 du transformateur T1 est reliée à l'émetteur du transistor K1 mais l'autre borne de ce bobinage p1 est reliée à une borne du bobinage primaire p2 du transformateur T2, l'autre borne de ce bobinage p2 étant reliée à l'anode de la diode D2 (cette anode de la diode D2 étant reliée, comme précédemment, au collecteur du transistor K2).

Le transformateur T2 a la même fonction que le transformateur T de la figure 2.

Le bobinage secondaire s2 du tranformateur T2 permet l'évacuation de l'énergie excédentaire, présente dans le circuit magnétique du transformateur T2, vers la source S. Les diodes D1 et D2 servent à restituer à la source S l'énergie emmagasinée dans les inductances de fuite des transformateurs T1 et T2.

Le dispositif représenté sur la figure 5 présente, par rapport au dispositif représenté sur la figure 3, l'avantage de permettre de moins solliciter en courant les composants du dispositif, par un tranfert plus important de l'énergie excédentaire.

En effet, dans le cas de la figure 5, si le bobinage secondaire s2 du transformateur T2 ("enroulement de démagnétisation") a un rapport de transformation inférieur à 1, on peut récupérer aux bornes du bobinage primaire p2 du transformateur T2 une tension supérieure à la tension de la source S, ce qui est impossible avec le dispositif de la figure 3.

Le dispositif conforme à l'invention, qui est schématiquement représenté sur la figure 6, diffère de celui qui est représenté sur la figure 5 par le fait que l'énergie excédentaire n'est plus envoyée à la source S mais déroutée vers les moyens 26 qui ont déjà été mentionnés plus haut et qui absorbent cette énergie.

Dans le dispositif de la figure 6, la diode D'4 n'est plus reliée à la borne + de la source S mais est reliée à une borne du condensateur 28 faisant partie des moyens 26, l'autre borne du condensateur 28 étant reliée à la borne - de la source S. Comme précédemment, la résistance électrique 30 est montée entre les bornes du condensateur 28.

Bien entendu, on obtiendrait encore des dispositifs conformes à l'invention en inversant, dans les dispositifs des figures 5 et 6, les polarités des diodes D1, D2, D'3 et D4 et la polarité de la source S (la borne + étant reliée à l'émetteur du transistor K2 et la borne - étant reliée au collecteur du transistor K1).

Les dispositifs des figures 5 et 6 ne fonctionnent que si le sens du couplage des bobinages primaire p1 et secondaire s1 du transformateur T1 et le sens du couplage des bobinages primaire p2 et secondaire s2 du transformateur T2 sont corrects. Ces sens sont indiqués, de façon classique, par des points sur les figures 5 et 6.

Pour que les dispositifs schématiquement représentés sur les figures 3, 4, 5 et 6 permettent de maîtriser précisément la tension aux bornes du condensateur C, il est préférable que le transformateur T1 ait une faible inductance de fuite et que le câblage des éléments reliés au bobinage secondaire s1 du transformateur T1 ait une faible inductance.

Bien entendu, la source S, dont un exemple de réalisation a été donné plus haut à titre purement indicatif et nullement limitatif, pourrait être remplacée dans les dispositifs des figures 2 à 6, par toute autre source de tension continue comportant des moyens de stockage d'énergie électrique, capables de récupérer l'énergie excédentaire.

Au lieu d'un transistor IGBT, on pourrait par exemple utiliser, en tant que commutateur K1 ou K2, un thyristor GTO, l'anode, la cathode et la gâchette de ce thyristor étant respectivement connectées comme le collecteur, l'émetteur et la base du transistor qu'il remplace.

## Revendications

1. Dispositif de charge de moyens (C) d'accumulation d'énergie électrique, ce dispositif étant adapté pour l'alimentation électrique impulsionnelle à partir d'une charge préalablement emmagasinée dans les moyens d'accumulation et comprenant :
- des moyens (S) d'alimentation électrique continue de ces moyens d'accumulation,
- des moyens de commutation (K) qui relient les moyens (S) d'alimentation électrique continue aux moyens (C) d'accumulation d'énergie électrique et dont la fermeture permet la charge de ces derniers,
- des moyens (cm) de commande des moyens de commutation,
- un moyen inductif (p) d'accumulation temporaire d'énergie magnétique, et
- des moyens prévus pour dérouter une énergie électrique excédentaire, essentiellement d'origine magnétique, susceptible d'apparaître dans le dispositif au cours de la charge des moyens (C) d'accumulation, vers des moyens (S; 26) capables d'absorber cette énergie électrique excédentaire, évitant ainsi d'envoyer cette énergie vers les moyens d'accumulation, caractérisé en ce que les moyens de commutation sont des moyens de commutation à commande directe pour l'ouverture et la fermeture, en ce que les moyens de commande sont prévus pour comparer à un seuil de tension déterminé la tension aux bornes des moyens (C) d'accumulation d'énergie électrique et pour commander l'ouverture des moyens de commutation lorsque le seuil est atteint par cette tension aux bornes des moyens d'accumulation, et en ce que le dispositif comprend un transformateur (T) comportant :
- un bobinage primaire (p) formant le moyen inductif et relié, d'un côté, aux moyens de commutation (K) et, de l'autre, aux moyens (C) d'accumulation d'énergie électrique par l'intermédiaire d'une diode (dl) qui empêche la décharge de ces derniers vers les moyens d'alimentation électrique continue (S), et
- un bobinage secondaire (s) qui est prévu pour l'évacuation de l'énergie électrique excédentaire vers les moyens (S; 26) capables d'absorber cette dernière, et qui est connecté, d'un côté, à ces moyens, par l'intermédiaire d'une autre diode (d2) dont la polarité permet cette évacuation, et de l'autre côté, à une borne des moyens d'alimentation électrique continue.

2. Dispositif de charge de moyens (C) d'accumulation d'énergie électrique, ce dispositif étant adapté pour l'alimentation électrique impulsionnelle à partir d'une charge préalablement emmagasinée dans les moyens d'accumulation et comprenant :
- des moyens (S) d'alimentation électrique continue de ces moyens d'accumulation,
- des moyens de commutation (K1, K2) qui relient les moyens (S) d'alimentation électrique continue aux moyens (C) d'accumulation d'énergie électrique et dont la fermeture permet la charge de ces derniers,
- des moyens (CM) de commande des moyens de commutation,
- un moyen inductif (L) d'accumulation temporaire d'énergie magnétique, et
- des moyens prévus pour dérouter une énergie électrique excédentaire, essentiellement d'origine magnétique, susceptible d'apparaître dans le dispositif au cours de la charge des moyens (C) d'accumulation, vers des moyens (S; 26) capables d'absorber cette énergie électrique excédentaire, évitant ainsi d'envoyer cette énergie vers les moyens d'accumulation, caractérisé en ce que les moyens de commutation sont des moyens de commutation à commande directe pour l'ouverture et la fermeture, en ce que les moyens de commande sont prévus pour comparer à un seuil de tension déterminé la tension aux bornes des moyens (C) d'accumulation d'énergie électrique et pour commander l'ouverture des moyens de commutation lorsque le seuil est atteint par cette tension aux bornes des moyens d'accumulation, en ce que le dispositif comprend en outre des moyens (T1) prévus pour l'isolation galvanique d'une charge (CH), qui est destinée à être alimentée par les moyens (C) d'accumulation d'énergie électrique, vis-à-vis des moyens (S) d'alimentation électrique continue, les moyens d'accumulation étant reliés à ces derniers par voie magnétique, en ce que le moyen inductif comprend une inductance (L), en ce que les moyens de commutation comprennent :
- un premier commutateur (K1) qui est relié, d'un côté, à une première borne des moyens (S) d'alimentation électrique continue et, de l'autre, à la deuxième borne de ces derniers par l'intermédiaire d'une première diode (D1), et
- un deuxième commutateur (K2) qui est relié, d'un côté, aux moyens (S; 26) capables d'absorber l'énergie électrique excédentaire, par l'intermédiaire d'une deuxième diode (D2) et, de l'autre, à la deuxième borne des moyens (S) d'alimentation électrique continue, les premier et deuxième commutateurs étant commandés simultanément par lesdits moyens de commande, en ce que les moyens d'isolation galvanique comprennent un transformateur (T1) comportant un bobinage primaire (p1) et un bobinage secondaire (s1), en ce que ce bobinage secondaire est relié aux moyens (C) d'accumulation d'énergie électrique par l'intermédiaire d'une troisième diode (D3) qui empêche la décharge de ces derniers vers les moyens (S) d'alimentation électrique continue, et en ce que le bobinage primaire (p1) est relié, d'un côté, à la connexion entre le premier commutateur (K1) et la première diode (D1) et, de l'autre, d'une part, à la deuxième borne des moyens (S) d'alimentation électrique continue par l'intermédiaire d'une quatrième diode (D4) et, d'autre part, à la connexion entre le deuxième commutateur (K2) et la deuxième diode (D2) par l'intermédiaire de ladite inductance (L), les polarités respectives des première, deuxième et quatrième diodes permettant l'évacuation de l'énergie électrique excédentaire.

3. Dispositif de charge de moyens (C) d'accumulation d'énergie électrique, ce dispositif étant adapté pour l'alimentation électrique impulsionnelle à partir d'une charge préalablement emmagasinée dans les moyens d'accumulation et comprenant :
- des moyens (S) d'alimentation électrique continue de ces moyens d'accumulation,
- des moyens de commutation (K1, K2) qui relient les moyens (S) d'alimentation électrique continue aux moyens (C) d'accumulation d'énergie électrique et dont la fermeture permet la charge de ces derniers,
- des moyens (CM) de commande des moyens de commutation,
- un moyen inductif (p2) d'accumulation temporaire d'énergie magnétique, et
- des moyens prévus pour dérouter une énergie électrique excédentaire, essentiellement d'origine magnétique, susceptible d'apparaître dans le dispositif au cours de la charge des moyens (C) d'accumulation, vers des moyens (S; 26) capables d'absorber cette énergie électrique excédentaire, évitant ainsi d'envoyer cette énergie vers les moyens d'accumulation, caractérisé en ce que les moyens de commutation sont des moyens de commutation à commande directe pour l'ouverture et la fermeture, en ce que les moyens de commande sont prévus pour comparer à un seuil de tension déterminé la tension aux bornes des moyens (C) d'accumulation d'énergie électrique et pour commander l'ouverture des moyens de commutation lorsque le seuil est atteint par cette tension aux bornes des moyens d'accumulation, en ce que le dispositif comprend en outre des moyens (T1) prévus pour l'isolation galvanique d'une charge (CH), qui est destinée à être alimentée par les moyens (C) d'accumulation d'énergie électrique, vis-à-vis des moyens (S) d'alimentation électrique continue, les moyens d'accumulation étant reliés à ces derniers par voie magnétique, et un transformateur (T2) comportant un bobinage primaire (p2), formant le moyen inductif, et un bobinage secondaire (s2), en ce que les moyens de commutation comprennent :
- un premier commutateur (K1) qui est relié, d'un côté, à une première borne des moyens (S) d'alimentation électrique continue et, de l'autre, à la deuxième borne de ces derniers par l'intermédiaire d'une première diode (D1), et
- un deuxième commutateur (K2) qui est relié, d'un côté, à la première borne des moyens (S) d'alimentation électrique continue par l'intermédiaire d'une deuxième diode (D2) et, de l'autre, à la deuxième borne des moyens (S) d'alimentation électrique continue, les premier et deuxième commutateurs étant commandés simultanément par lesdits moyens de commande, en ce que les moyens d'isolation galvanique comprennent un transformateur auxiliaire (T1) comportant un bobinage primaire (p1) et un bobinage secondaire (s1), en ce que le bobinage secondaire (s1) de ce transformateur auxiliaire (T1) est relié aux moyens (C) d'accumulation d'énergie électrique par l'intermédiaire d'une troisième diode (D3) qui empêche la décharge de ces derniers vers les moyens (S) d'alimentation électrique continue, en ce que le bobinage primaire (p1) de ce transformateur auxiliaire (T1) est relié, d'un côté, à la connexion entre le premier commutateur (K1) et la première diode (D1) et, de l'autre, à la connexion entre le deuxième commutateur (K2) et la deuxième diode (D2) par l'intermédiaire du bobinage primaire (p2) dudit transformateur (T2), en ce que le dispositif comprend en outre une quatrième diode (D′4) par l'intermédiaire de laquelle une borne du bobinage secondaire (s2) dudit transformateur (T2) est reliée aux moyens (S; 26) capables d'absorber l'énergie électrique excédentaire, et en ce que l'autre borne du bobinage secondaire (s2) dudit transformateur (T2) est reliée à une borne des moyens (S) d'alimentation électrique continue, les polarités respectives des première, deuxième et quatrième diodes permettant l'évacuation de l'énergie électrique excédentaire.

4. Dispositif selon l'une quelconque des revendications 1 à 3, caractérisé en ce que les moyens capables d'absorber l'énergie électrique excédentaire sont les moyens (S) d'alimentation électrique continue, ces derniers comportant des moyens (C1) de stockage d'énergie électrique, prévus pour récupérer l'énergie électrique excédentaire.

5. Dispositif selon l'une quelconque des revendications 1, 2 et 3, caractérisé en ce que les moyens capables d'absorber l'énergie électrique excédentaire sont les moyens (S) d'alimentation électrique continue, ces derniers comportant des moyens (C1) de stockage d'énergie électrique, prévus pour récupérer l'énergie électrique excédentaire et en ce que les moyens prévus pour dérouter cette énergie électrique excédentaire coopèrent avec ces moyens d'alimentation électrique continue de façon que l'énergie électrique excédentaire soit absorbée, dès sont apparition, par ces derniers.

6. Dispositif selon l'une quelconque des revendications 1 à 5, caractérisé en ce que les moyens de commutation (K; K1, K2) sont des moyens de commutation à semiconducteurs.

7. Dispositif selon l'une quelconque des revendications 1 à 6, caractérisé en ce que les moyens (C) d'accumulation d'énergie électrique sont destinés à l'alimentation électrique d'un laser (18) à vapeur métallique.

## Claims

1. Device for charging electrical energy storage means (C), this device being suitable for the pulsed electrical supply from a charge previously stored in the storage means and comprising:
- DC electrical supply means (S) for these storage means,
- switching means (K) which connect the DC electrical supply means (S) to the electrical energy storage means (C) and the closing of which makes the charging of the latter possible,
- means (cm) for controlling the switching means,
- an inductive means (p) for temporarily storing magnetic energy, and
- means provided for re-routing excess electrical energy, essentially of magnetic origin, likely to appear in the device in the course of charging the storage means (C), to means (S; 26) capable of absorbing this excess electrical energy, thus avoiding sending this energy to the storage means, characterized in that the switching means are switching means having direct control for the opening and the closing, in that the control means are provided in order to compare the voltage at the terminals of the electrical energy storage means (C) with a defined voltage threshold and in order to cause the opening of the switching means when the threshold is reached by this voltage at the terminals of the storage means, and in that the device comprises a transformer (T) which includes:
- a primary winding (p) forming the inductive means and connected, on one side, to the switching means (K) and, on the other, to the electrical energy storage means (C) via a diode (dl) which prevents the latter from discharging to the DC electrical supply means (S), and
- a secondary winding (s) which is provided for removing the excess electrical energy to the means (S; 26) capable of absorbing the latter, and which is connected up, on one side, to these means via another diode (d2), the polarity of which makes this removal possible, and, on the other side, to a terminal of the DC electrical supply means.

2. Device for charging electrical energy storage means (C), this device being suitable for the pulsed electrical supply from a charge previously stored in the storage means and comprising:
- DC electrical supply means (S) for these storage means,
- switching means (K1, K2) which connect the DC electrical supply means (S) to the electrical energy storage means (C) and the closing of which makes the charging of the latter possible,
- means (CM) for controlling the switching means,
- an inductive means (L) for temporarily storing magnetic energy, and
- means provided for re-routing excess electrical energy, essentially of magnetic origin, likely to appear in the device in the course of charging the storage means (C), to means (S; 26) capable of absorbing this excess electrical energy, thus avoiding sending this energy to the storage means, characterized in that the switching means are switching means having direct control for the opening and closing, in that the control means are provided in order to compare the voltage at the terminals of the electrical energy storage means (C) with a defined voltage threshold and in order to cause the opening of the switching means when the threshold is reached by this voltage at the terminals of the storage means, in that the device furthermore comprises means (T1) provided for the DC isolation of a charge (CH), which is intended to be supplied by the electrical energy storage means (C), with respect to the DC electrical supply means (S), the storage means being connected to the latter magnetically, in that the inductive means comprises an inductor (L), in that the switching means comprise:
- a first switch (K1) which is connected, on one side, to a first terminal of the DC electrical supply means (S) and, on the other side, to the second terminal of the latter via a first diode (D1), and
- a second switch (K2) which is connected, on one side, to the means (S; 26) capable of absorbing the excess electrical energy, via a second diode (D2) and, on the other side, to the second terminal of the DC electrical supply means (S), the first and second switches being simultaneously controlled by the said control means, and in that the DC isolation means comprise a transformer (T1) which includes a primary winding (p1) and a secondary winding (s1), and in that this secondary winding is connected to the electrical energy storage means (C) via a third diode (D3) which prevents the latter from discharging to the DC electrical supply means (S), and in that the primary winding (p1) is connected, on one side, to the connection between the first switch (K1) and the first diode (D1) and, on the other side, on the one hand, to the second terminal of the DC electrical supply means (S) via a fourth diode (D4) and, on the other hand, to the connection between the second switch (K2) and the second diode (D2) via the said inductor (L), the respective polarities of the first, second and fourth diodes making the removal of the excess electrical energy possible.

3. Device for charging electrical energy storage means (C), this device being suitable for the pulsed electrical supply from a charge previously stored in the storage means and comprising:
- DC electrical supply means (S) for these storage means,
- switching means (K1, K2) which connect the DC electrical supply means (S) to the electrical energy storage means (C) and the closing of which makes the charging of the latter possible,
- means (CM) for controlling the switching means,
- an inductive means (p2) for temporarily storing magnetic energy, and
- means provided for re-routing excess electrical energy, essentially of magnetic origin, likely to appear in the device in the course of charging the storage means (C), to means (S; 26) capable of absorbing this excess electrical energy, thus avoiding sending this energy to the storage means, characterized in that the switching means are switching means having direct control for the opening and closing, in that the control means are provided in order to compare the voltage at the terminals of the electrical energy storage means (C) with a defined voltage threshold and in order to cause the opening of the switching means when the threshold is reached by this voltage at the terminals of the storage means, in that the device furthermore comprises means (T1) provided for the DC isolation of a charge (CH), which is intended to be supplied by the electrical energy storage means (C), with respect to the DC electrical supply means (S), the storage means being connected to the latter magnetically, and a transformer (T2) which includes a primary winding (p2), forming the inductive means, and a secondary winding (s2), in that the switching means comprise:
- a first switch (K1) which is connected, on one side, to a first terminal of the DC electrical supply means (S) and, on the other side, to the second terminal of the latter via a first diode (D1), and
- a second switch (K2) which is connected, on one side, to the first terminal of the DC electrical supply means (S) via a second diode (D2) and, on the other side, to the second terminal of the DC electrical supply means (S), the first and second switches. being controlled simultaneously by the said control means, in that the DC isolation means comprise an auxiliary transformer (T1) which includes a primary winding (pl) and a secondary winding (s1), in that the secondary winding (s1) of this auxiliary transformer (T1) is connected to the electrical energy storage means (C) via a third diode (D3) which prevents the latter from discharging to the DC electrical supply means (S), in that the primary winding (pl) of this auxiliary transformer (T1) is connected, on one side, to the connection between the first switch (K1) and the first diode (D1) and, on the other side, to the connection between the second switch (K2) and the second diode (D2) via the primary winding (p2) of the said transformer (T2), in that the device furthermore comprises a fourth diode (D′4) via which a terminal of the secondary winding (s2) of the said transformer (T2) is connected to the means (S; 26) capable of absorbing the excess electrical energy, and in that the other terminal of the secondary winding (s2) of the said transformer (T2) is connected to a terminal of the DC electrical supply means (S), the respective polarities of the first, second and fourth dioden making the removal of the excess electrical energy possible.

4. Device according to any one of Claims 1 to 3, characterized in that the means capable of absorbing the excess electrical energy are the DC electrical supply means (S), the latter including electrical energy storage means (C1) provided for recovering the excess electrical energy.

5. Device according to any one of Claims 1, 2 and 3, characterized in that the means capable of absorbing the excess electrical energy are the DC electrical supply means (S), the latter including electrical energy storage means (C1) provided for recovering the excess electrical energy and in that the means provided for re-routing this excess electrical energy interact with these DC electrical supply means so that the excess electrical energy is absorbed as soon as it appears, by the latter.

6. Device according to any one of Claims 1 to 5, characterized in that the switching means (K; K1, K2) are semiconductor switching means.

7. Device according to any one of Claims 1 to 6, characterized in that the electrical energy storage means (C) are intended for the electrical supply of a metal vapour laser (18).

## Patentansprüche

1. Vorrichtung zum Aufladen von Einrichtungen (C) zur Speicherung elektrischer Energie, wobei diese Vorrichtung angepaßt ist an die impulsförmige elektrische Versorgung ausgehend von einer vorher in den Speicherungseinrichtungen gespeicherten Ladung und
- Einrichtungen (S) zur elektrischen Gleichspannungsversorgung dieser Speicherungseinrichtungen,
- Schalteinrichtungen (K), die die Einrichtungen (S) zur elektrischen Gleichspannungsversorgung mit den Einrichtungen (C) zur Speicherung elektrischer Energie verbinden und deren Schließen das Aufladen der letzteren gestattet,
- Steuerungseinrichtungen (cm) für die Schalteinrichtungen,
- eine induktive Einrichtung (p) zur zeitweiligen Speicherung magnetischer Energie und
- Einrichtungen umfaßt, die dazu vorgesehen sind, eine überschüssige elektrische Energie, die im wesentlichen magnetischen Ursprungs ist und die in der Vorrichtung im Lauf des Aufladens der Speicherungseinrichtungen (C) auftreten kann, nach Einrichtungen (S; 26), die imstande sind, diese überschüssige elektrische Energie zu absorbieren, hin abzuleiten, wobei so vermieden wird, daß diese Energie zu den Speicherungseinrichtungen geschickt wird,
gekennzeichnet dadurch, daß die Schalteinrichtungen Schalteinrichtungen mit direkter Betätigung für das Öffnen und das Schließen sind,
dadurch, daß die Steuerungseinrichtungen dazu vorgesehen sind, die Spannung an den Anschlüssen der Einrichtungen (C) zur Speicherung elektrischer Energie mit einer festgelegten Spannungsschwelle zu vergleichen und das Öffnen der Schalteinrichtungen zu betätigen, wenn die Schwelle von dieser Spannung an den Anschlüssen der Speicherungseinrichtungen erreicht wird,
und dadurch, daß die Vorrichtung einen Transformator (T) enthält, der
- eine Primärwicklung (p), die die induktive Einrichtung bildet und die auf einer Seite mit den Schalteinrichtungen (K), auf der anderen Seite mit den Einrichtungen (C) zur Speicherung elektrischer Energie über eine Diode (d1), die ihre Entladung nach den Einrichtungen zur elektrischen Gleichspannungsversorgung (S) hin verhindert, verbunden ist, und
- eine Sekundärwicklung (s) umfaßt, die zur Beseitigung der überschüssigen elektrischen Energie nach den Einrichtungen (S; 26) hin vorgesehen ist, die imstande sind, diese Energie zu absorbieren, und die auf einer Seite mit diesen Einrichtungen über eine weitere Diode (d2), deren Polarität diese Beseitigung erlaubt, auf der anderen Seite mit einem Anschluß der Einrichtungen zur elektrischen Gleichspannungsversorgung verbunden ist.

2. Vorrichtung zum Aufladen von Einrichtungen (C) zur Speicherung elektrischer Energie, wobei diese Vorrichtung angepaßt ist an die impulsförmige elektrische Versorgung ausgehend von einer vorher in den Speicherungseinrichtungen gespeicherten Ladung und
- Einrichtungen (S) zur elektrischen Gleichspannungsversorgung dieser Speicherungseinrichtungen,
- Schalteinrichtungen (K1, K2), die die Einrichtungen (S) zur elektrischen Gleichspannungsversorgung mit den Einrichtungen (C) zur Speicherung elektrischer Energie verbinden und deren Schileßen das Aufladen der letzteren gestattet,
- Steuerungseinrichtungen (CM) für die Schalteinrichtungen,
- eine induktive Einrichtung (L) zur zeitweiligen Speicherung magnetischer Energie und
- Einrichtungen umfaßt, die dazu vorgesehen sind, eine überschüssige elektrische Energie, die im wesentlichen magnetischen Ursprungs ist und die in der Vorrichtung im Lauf des Aufladens der Speicherungseinrichtungen (C) auftreten kann, nach Einrichtungen (S; 26), die imstande sind, diese überschüssige elektrische Energie zu absorbieren, hin abzuleiten, wobei so vermieden wird, daß diese Energie zu den Speicherungseinrichtungen geschickt wird,
gekennzeichnet dadurch, daß die Schalteinrichtungen Schalteinrichtungen mit direkter Betätigung für das Öffnen und das Schließen sind,
dadurch, daß die Steuerungseinrichtungen dazu vorgesehen sind, die Spannung an den Anschlüssen der Einrichtungen (C) zur Speicherung elektrischer Energie mit einer festgelegten Spannungsschwelle zu vergleichen und das Öffnen der Schalteinrichtungen zu betätigen, wenn die Schwelle von dieser Spannung an den Anschlüssen der Speicherungseinrichtungen erreicht wird,
dadurch, daß die Vorrichtung ferner Einrichtungen (T1) umfaßt, die vorgesehen sind zur galvanischen Isolation einer Last (CH), die bestimmt ist, von den Einrichtungen (C) zur Speicherung elektrischer Energie versorgt zu werden, gegenüber den Einrichtungen (S) zur elektrischen Gleichspannungsversorgung, wobei die Speicherungseinrichtungen mit den letzteren auf magnetischem Wege verbunden sind,
dadurch, daß die induktive Einrichtung eine Induktivität (L) umfaßt,
dadurch, daß die Schalteinrichtungen
- einen ersten Schalter (K1), der auf einer Seite mit einem ersten Anschluß der Einrichtungen (S) zur elektrischen Gleichspannungsversorgung und auf der anderen Seite mit dem zweiten Anschluß dieser letzteren über eine erste Diode (D1) verbunden ist, und
- einen zweiten Schalter (K2) umfassen, der auf einer Seite über eine zweite Diode (D2) mit den Einrichtungen (S; 26), die imstande sind, die überschüssige elektrische Energie zu absorbieren, und auf der anderen Seite mit dem zweiten Anschluß der Einrichtungen (S) zur elektrischen Gleichspannungsversorgung verbunden ist, wobei der erste und der zweite Schalter gleichzeitig von den genannten Steuerungseinrichtungen betätigt werden,
dadurch, daß die Einrichtungen zur galvanischen Isolation einen Transformator (T1) enthalten, der eine Primärwicklung (p1) und eine Sekundärwicklung (s1) umfaßt,
dadurch, daß diese Sekundärwicklung mit den Einrichtungen (C) zur Speicherung elektrischer Energie über eine dritte Diode (D3), die die Entladung dieser letzteren nach den Einrichtungen (S) zur elektrischen Gleichspannungsversorgung hin verhindert, verbunden ist,
und dadurch, daß die Primärwicklung (p1) auf einer Seite mit der Verbindung zwischen dem ersten Schalter (K1) und der ersten Diode (D1) und auf der anderen Seite einerseits über eine vierte Diode (D4) mit dem zweiten Anschluß der Einrichtungen (S) zur elektrischen Gleichspannungsversorgung und andererseits über genannte Induktivität (L) mit der Verbindung zwischen dem zweiten Schalter (K2) und der zweiten Diode (D2) verbunden ist, wobei die Polaritäten der ersten, zweiten bzw. vierten Diode die Beseitigung der überschüssigen elektrischen Energie gestatten.

3. Vorrichtung zum Aufladen von Einrichtungen (C) zur Speicherung elektrischer Energie, wobei diese Vorrichtung angepaßt ist an die impulsförmige elektrische Versorgung ausgehend von einer vorher in den Speicherungseinrichtungen gespeicherten Ladung und
- Einrichtungen (S) zur elektrischen Gleichspannungsversorgung dieser Speicherungseinrichtungen,
- Schalteinrichtungen (K1, K2), die die Einrichtungen (S) zur elektrischen Gleichspannungsversorgung mit den Einrichtungen (C) zur Speicherung elektrischer Energie verbinden und deren Schließen das Aufladen der letzteren gestattet,
- Steuerungseinrichtungen (CM) für die Schalteinrichtungen,
- eine induktive Einrichtung (p2) zur zeitweiligen Speicherung magnetischer Energie und
- Einrichtungen umfaßt, die dazu vorgesehen sind, eine überschüssige elektrische Energie, die im wesentlichen magnetischen Ursprungs ist und die in der Vorrichtung im Lauf des Aufladens der Speicherungseinrichtungen (C) auftreten kann, nach Einrichtungen (S; 26), die imstande sind, diese überschüssige elektrische Energie zu absorbieren, hin abzuleiten, wobei so vermieden wird, daß diese Energie zu den Speicherungseinrichtungen geschickt wird,
gekennzeichnet dadurch, daß die Schalteinrichtungen Schalteinrichtungen mit direkter Betätigung für das Öffnen und das Schließen sind,
dadurch, daß die Steuerungseinrichtungen dazu vorgesehen sind, die Spannung an den Anschlüssen der Einrichtungen (C) zur Speicherung elektrischer Energie mit einer festgelegten Spannungsschwelle zu vergleichen und das Öffnen der Schalteinrichtungen zu betätigen, wenn die Schwelle von dieser Spannung an den Anschlüssen der Speicherungseinrichtungen erreicht wird,
dadurch, daß die Vorrichtung ferner Einrichtungen (T1), die vorgesehen sind zur galvanischen Isolation einer Last (CH), die bestimmt ist, von den Einrichtungen (C) zur Speicherung elektrischer Energie versorgt zu werden, gegenüber den Einrichtungen (S) zur elektrischen Gleichspannungsversorgung, wobei die Speicherungseinrichtungen mit den letzteren auf magnetischem Wege verbunden sind, und einen Transformator (T2) umfaßt, der eine Primärwicklung (p2), die die induktive Einrichtung bildet, und eine Sekundärwicklung (s2) enthält,
dadurch, daß die Schalteinrichtungen
- einen ersten Schalter (K1), der auf einer Seite mit einem ersten Anschluß der Einrichtungen (S) zur elektrischen Gleichspannungsversorgung und auf der anderen Seite mit dem zweiten Anschluß dieser letzteren über eine erste Diode (D1) verbunden ist, und
- einen zweiten Schalter (K2) umfassen, der auf einer Seite über eine zweite Diode (D2) mit dem ersten Anschluß der Einrichtungen (S) zur elektrischen Gleichspannungsversorgung und auf der anderen Seite mit dem zweiten Anschluß der Einrichtungen (S) zur elektrischen Gleichspannungsversorgung verbunden ist, wobei der erste und der zweite Schalter gleichzeitig von den genannten Steuerungeinrichtungen betätigt werden,
dadurch, daß die Einrichtungen zur galvanischen Isolation einen Hilfstransformator (T1) enthalten, der eine Primärwicklung (p1) und eine Sekundärwicklung (s1) umfaßt,
dadurch, daß die Sekundärwicklung (s1) dieses Hilfstransformators (T1) mit den Einrichtungen (C) zur Speicherung elektrischer Energie über eine dritte Diode (D3) verbunden ist, die die Entladung dieser letzteren nach den Einrichtungen (S) zur elektrischen Gleichspannungsversorgung hin verhindert,
dadurch, daß die Primärwicklung (p1) dieses Hilfstransformators (T1) auf einer Seite mit der Verbindung zwischen dem ersten Schalter (K1) und der ersten Diode (D1) und auf der anderen Seite über die Primärwicklung (p2) des genannten Transformators (T2) mit der Verbindung zwischen dem zweiten Schalter (K2) und der zweiten Diode (D2) verbunden ist,
dadurch, daß die Vorrichtung ferner eine vierte Diode (D′4) umfaßt, über die ein Anschluß der Sekundärwicklung (s2) des genannten Transformators (T2) mit den Einrichtungen (S; 26), die imstande sind, die überschüssige elektrische Energie zu absorbieren, verbunden ist,
und dadurch, daß der andere Anschluß der Sekundärwicklung (s2) des genannten Transformators (T2) mit einem Anschluß der Einrichtungen (S) zur elektrischen Gleichspannungsversorgung verbunden ist, wobei die Polaritäten der ersten, zweiten bzw. vierten Diode die Beseitigung der überschüssigen elektrischen Energie gestatten.

4. Vorrichtung nach einem der Ansprüche 1 bis 3, gekennzeichnet dadurch, daß die Einrichtungen, die imstande sind, die überschüssige elektrische Energie zu absorbieren, die Einrichtungen (S) zur elektrischen Gleichspannungsversorgung sind, wobei die letzteren Speicherungseinrichtungen (C1) für elektrische Energie umfassen, die dazu vorgesehen sind, die überschüssige elektrische Energie wiederzugewinnen.

5. Vorrichtung nach einem der Ansprüche 1, 2 und 3, gekennzeichnet dadurch, daß die Einrichtungen, die imstande sind, die überschüssige elektrische Energie zu absorbieren, die Einrichtungen (S) zur elektrischen Gleichspannungsversorgung sind, wobei die letzteren Speicherungseinrichtungen (C1) für elektrische Energie umfassen, die dazu vorgesehen sind, die überschüssige elektrische Energie wiederzugewinnen,
und dadurch, daß die zur Ableitung dieser überschüssigen elektrischen Energie vorgesehenen Einrichtungen mit diesen Einrichtungen zur elektrischen Gleichspannungsversorgung so zusammenwirken, daß die überschüssige elektrische Energie bei ihrem Auftreten von den letzteren absorbiert wird.

6. Vorrichtung nach einem der Ansprüche 1 bis 5, ge-kennzeichnet dadurch, daß die Schalteinrichtungen (K; K1, K2) Halbleiter-Schalteinrichtungen sind.

7. Vorrichtung nach einem der Ansprüche 1 bis 6, gekennzeichnet dadurch, daß die Einrichtungen (C) zur Speicherung elektrischer Energie für die elektrische Versorgung eines Metalldampflasers (18) bestimmt sind.
